# EUROPÄISCHE PATENTSCHRIFT

(11) **EP 1 442 229 B1**
(45) Veröffentlichungstag und Bekanntmachung des Hinweises auf die Patenterteilung: **27.12.2006**
(21) Anmeldenummer: 02777115.3
(22) Anmeldetag: 16.09.2002
(51) Int. Cl.: F16F 15/16, F16F 15/14, F16F 15/31

(54) **VORRICHTUNG ZUM DÄMPFEN UND ISOLIEREN VON SCHWINGUNGEN**
DEVICE FOR DAMPING AND INSULATING VIBRATIONS
DISPOSITIF D'AMORTISSEMENT ET D'ISOLEMENT D'OSCILLATIONS

(30) Priorität: 05.11.2001 DE 10153838
(43) Veröffentlichungstag der Anmeldung: 04.08.2004
(73) Patentinhaber: Voith Turbo GmbH & Co. KG, 89522 Heidenheim (DE)
(72) Erfinder: POLIFKE, Gregor, 89537 Giengen (DE); BROCKMANN, Rolf, 89522 Heidenheim (DE); HARTLEITNER, Armin, 89446 Ziertheim (DE)
(74) Vertreter: Dr. Weitzel & Partner
(86) Internationale Anmeldenummer: PCT/EP2002/010361
(87) Internationale Veröffentlichungsnummer: WO 2003/040589

(56) Entgegenhaltungen:
- EP-A- 0 108 393
- EP-A- 0 763 673
- DE-A- 19 649 712
- US-A- 4 842 116
- US-A- 5 353 664
- US-A1- 2001 003 323

## Beschreibung

Die Erfindung betrifft eine Vorrichtung zum Dämpfen und Isolieren von Schwingungen.

Dämpfungsvorrichtungen von elastischen Kupplungen sind beispielsweise aus den folgenden Druckschriften bekanntgeworden:
(1) DE 83 18 041 U
(2) DE 29 37 237 C2
(3) EP 0 763 673 A2
(4) US 2001/0003323 A1.

Eine derartige Dämpfungseinrichtung dient dazu, in einen Antriebsstrang eingebaut zu werden, und zwar insbesondere in einen Antriebsstrang zwischen einem Verbrennungsmotor, der Drehschwingungen erzeugt, und einem Getriebe.

Eine Dämpfungsvorrichtung der bekannten Art umfaßt einen Primärteil und einen Sekundärteil. Zwischen diesen beiden Teilen ist ein hydraulischer Dämpfer geschaltet, ferner eine Federeinrichtung. Der hydraulische Dämpfer erlaubt eine begrenzte relative Verdrehung von Primärteil und Sekundärteil. Er umfaßt im allgemeinen eine Kammer, die ein Verdrängungsmedium enthält, beispielsweise ein Fett oder ein Öl, das bei der genannten Relativverdrehung zwischen Primärteil und Sekundärteil durch enge Auslässe verdrängt wird und somit eine Dämpfungskraft aufbringt. Die Federeinrichtung hat das Bestreben, der genannten relativen Verdrehung entgegenzuwirken und bei einer Auslenkung eine Mittellage wieder herzustellen.

Die beiden genannten Elemente - Dämpfer und Federeinrichtung - sind von einer Trägerscheibe getragen. Sie können baulich vereinigt sein, indem die genannte Kammer - oder Kammern - des Dämpfers gleichzeitig Federn der genannten Federeinrichtung umschließen.

Primärteil und Sekundärteil sind massebehaftet. So kann der Primärteil aus einem einzigen Schwungrad bestehen. Der Sekundärteil umfaßt beim Stande der Technik die Trägerscheibe sowie eine Nabe.

Die Trägerscheibe hat bei den bekannten Vorrichtungen die folgenden drei Funktionen zu erfüllen: zum einen trägt sie den Dämpfer und die Federeinrichtung, weiterhin stellt sie wenigstens einen Teil der notwendigen Masse des Sekundärteiles dar, und schließlich hat sie die Funktion der Drehmomentübertragung.

Eine gattungsgemäße Dämpfungsvorrichtung ist aus DE 29 37 237 C2 vorbekannt.

Die bekannten Vorrichtungen zum Dämpfen von Schwingungen entsprechend dem Stand der Technik arbeiten bezüglich der Drehmomentübertragung mit einer Federkopplung und bezüglich der Dämpfung von Schwingungen mit einer Dämpfungskopplung unter Verwendung von Coulombscher Reibung oder hydraulischer Dämpfung.

Vorrichtungen der genannten Art sind Serienartikel, an welche nicht nur bezüglich der technischen Funktionen, sondern auch bezüglich der Preiswürdigkeit hohe Anforderungen gestellt werden. Die Trägerscheibe stellt einen relativ hohen Posten der Herstellungskosten dar. Eine Verringerung der Herstellungskosten der Trägerscheibe ist daher besonders wünschenswert.

Die Druckschriften EP 0 763 673 A2 und US 2001/0003323 A1 offenbaren Zwei-Massenschwungräder, welche durch zwei miteinander über eine Dämpfungseinrichtung gekoppelte Schwungräder und eine Scheibe, die als Kupplungsscheibe fungiert und reibschlüssig mit dem zugehörigen, komplementären Kupplungselement, welches mit einem Getriebe verbunden ist, in Wirkverbindung bringbar ist.

Der Erfindung liegt die Aufgabe zugrunde, einen Drehschwingungsdämpfer derart zu gestalten, daß er möglichst einfach im Aufbau und kostengünstig in der Fertigung ist, daß das Bauvolumen möglichst gering ist, und daß er seine Funktion einwandfrei erfüllt.

Diese Aufgabe wird durch die Merkmale von Anspruch 1 gelöst.

Gemäß der Erfindung umfaßt ein Drehschwingungsdämpfer der genannten Art einen Sekundärteil, der wie folgt aufgebaut ist:
Der Sekundärteil oder der Primärteil umfassen zum einen die Trägerscheibe zum Tragen des hydraulischen Dämpfers sowie der Federeinrichtung, zum anderen aber auch eine Isolatorscheibe, die axial neben der Trägerscheibe angeordnet ist.

Der Unterschied zwischen dem Stand der Technik und der Erfindung läßt sich auch wie folgt charakterisieren:

Gemäß dem Stand der Technik wird motorseitig die Primärseite, im wesentlichen bestehend aus Gehäuse, Außenscheiben und Deckel, angeschlossen. Getriebeseitig wird die Sekundärseite, bestehend aus Trägerscheibe und Nabe, angeschlossen. Erfindungsgemäß wird sekundärseitig eine massenträgheitsmomentbehaftete Isolatorscheibe axial getrennt von der Trägerscheibe angeordnet.

Bei einer solchen Konstruktion kann und soll die Trägerscheibe so knapp wie möglich dimensioniert sein. Sie braucht somit nur derart stark bemessen zu sein, daß sie die Funktion des Tragens von Dämpfer und Federeinrichtung erfüllt, sowie die Funktion des Übertragens von Drehmoment. Hingegen sollte sie möglichst wenig Masse haben. Statt dessen wird die Funktion der Masse beziehungsweise des Massenträgheitsmomentes um die Drehachse soweit wie möglich von der Isolatorscheibe übernommen. Vereinfachend ausgedrückt könnte man sagen, daß die Trägerscheibe ein minimales Massenträgheitsmoment aufweist, bezogen auf die Drehachse der gesamten Vorrichtung, und die Isolatorscheibe ein maximales Massenträgheitsmoment.

Hieraus ergeben sich die folgenden Vorteile:
* die Trägerscheibe benötigt relativ wenig Material des für sie notwendigen, hochwertigen Stahles;
* die Bearbeitung gestaltet sich aufgrund einer minimierten Dicke der Trägerscheibe optimal; die zur Aufnahme der Federn notwendigen Fenster lassen sich mühelos ausstanzen;
* die Drehzahl der Sekundärseite läßt sich von der Isolatorscheibe leicht abgreifen; damit gewinnt man ein aussagefähiges Signal für eine Motor- und Getriebesteuerung.

Die Isolatorscheibe kann ein Massenträgheitsmoment haben, bezogen auf die Drehachse, das ein Vielfaches des Massenträgheitsmomentes der Trägerscheibe ist. So kommen beispielsweise Werte wie 2 : 1,3 : 1,5 : 1 in Betracht.

Die Trägerscheibe kann axial zwischen der Primärseite - beziehungsweise deren Schwungrad - und der Isolatorscheibe angeordnet sein. Statt dessen kann jedoch auch die Isolatorscheibe zwischen dem Schwungrad der Primärseite und der Trägerscheibe liegen.

Die Isolatorscheibe wird im allgemeinen zusammen mit der Trägerscheibe auf einer Nabe sitzen und mit dieser drehfest verbunden sein.

Die Isolatorscheibe kann in ihrem Umfangsbereich aus einem segmentierten, massenträgheitsmomentbehafteten Ring bestehen, wobei die einzelnen Segmente von Blattfedern oder Stabfedern getragen werden, die an ihren radial innenliegenden Bereichen an einer Nabe angeordnet sind. Die Blattfedern oder Stabfedern sind dabei derart vorgekrümmt, daß die Segmente im Ruhezustand auf einer radial weiter innen liegenden Bahn geführt werden. Unter Drehzahleinfluß richten sich die Blattfedern oder Stabfedern auf, so daß die Segmente auf radial weiter außenliegenden Bahnen geführt werden, so daß eine drehzahladaptive Isolatorscheibe vorliegt.

Es gibt eine weitere interessante Ausführungsform der Erfindung. So kann die Primärseite aus der Trägerscheibe gebildet werden. Die Trägerscheibe ist wiederum derart gestaltet und dimensioniert, daß sie den Festigkeitsanforderungen genügt, ohne dabei ein nennenswertes oder zusätzlich erhöhtes Massenträgheitsmoment aufzuweisen.

Die Sekundärseite hingegen wird wiederum mit einem hohen Massenträgheitsmoment ausgestattet, und zwar dadurch, daß die Bauteile Gehäuse, Deckel und Außenscheiben entsprechend dimensioniert werden und somit - jeweils für sich alleine oder in Kombination - die zuvor beschriebene Rolle der Isolatorscheibe übernehmen.

Bei dieser alternativen Ausführungsform handelt es sich somit um eine Umkehr der Anordnung der Bauteile entlang der Drehachse.

Die Vorteile der Erfindung lassen sich wie folgt zusammenfassen: Mit der Erfindung wird eine bekannte Vorrichtung zum Dämpfen von Schwingungen derart verbessert, daß durch optimierte Massenträgheitsmomente auf der Sekundärseite bereits eine schwingungstechnisch wirksame Isolation von primär- zu sekundärseitigen Schwingungen eintritt für die Anwendung bei Automatikgetrieben und Lastschaltgetrieben. Bei einem, dem jeweiligen Antriebsstrang angepaßten, sekundärseitig angeordneten Isolationsmassenträgheitsmoment werden kritische Eigenfrequenzen und somit Resonanzdrehzahlen in Richtung unkritischer Betriebsbereiche, zum Beispiel unterhalb der Leerlaufdrehzahl, verschoben. Somit wird bereits durch das sekundärseitige optimierte Massenträgheitsmoment einer Reihe von Schwingungsproblemen vorgebeugt. Die eigentliche Vorrichtung zum Dämpfen von Schwingungen muß nur noch entsprechend den verbleibenden Schwingungen ausgelegt werden.

Die Erfindung ist anhand der Zeichnung näher erläutert. Darin ist im einzelnen folgendes dargestellt:
- Figur 1: zeigt einen Drehschwingungsdämpfer mit Isolatorscheibe in einem Axialschnitt, als Bestandteil eines Antriebsstrangs.
- Figur 2: zeigt eine Draufsicht auf eine Trägerscheibe.
- Figur 3: zeigt eine zweite Ausführungsform eines Drehschwingungsdämpfers mit Isolatorscheibe in einem Axialschnitt.
- Figur 4: zeigt eine dritte Ausführungsform eines Drehschwingungsdämpfers mit Isolatorscheibe in einem Axialschnitt.
- Figur 5: zeigt eine vierte Ausführungsform eines Drehschwingungsdämpfers mit einer Isolatorscheibe in einem Axialschnitt.
- Figur 6: zeigt eine fünfte Ausführungsform eines Drehschwingungsdämpfers mit einer Isolatorscheibe in einem Axialschnitt.
- Figur 7: zeigt eine sechste Ausführungsform eines Drehschwingungsdämpfers mit einer Isolatorscheibe in einem Axialschnitt.
- Fig. 8, 9, 10: zeigen Einzelheiten von Trägerscheiben aus deren Umfangsbereich.
- Figur 11: zeigt schematisch ein Ringsegment, das über eine Blattfeder mit einer Nabe verbunden ist und die Funktion einer Isolatorscheibe ausübt.
- Figur 12: zeigt eine abgewandelte Ausführungsform des Gegenstandes von Figur 9.

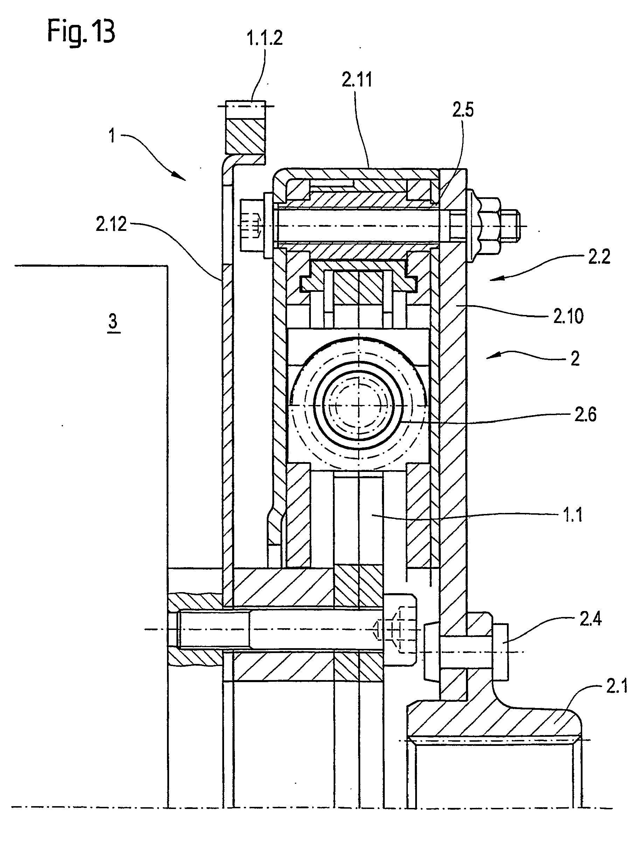

- Figur 13: verdeutlicht demgegenüber eine nicht erfindungsgemäße Ausführung mit Integration der Funktion der Isolatorscheibe im Sekundärteil 2, d.h. es ist keine separate Isolatorscheibe vorgesehen. Das Primärteil 1 umfaßt ein drehfest mit der Antriebsmaschine, insbesondere einer Verbrennnungskraftmaschine gekoppeltes Primärrad 1.1. Das Sekundärteil 2 umfaßt eine aus einer Mehrzahl einzelner Scheiben gebildete Trägerscheibe 2.2 und eine Nabe 2.1 zum Anschluß an ein Anschlußelement an der hier nicht dargestellten Getriebebaueinheit. Beispielhaft kann die Verbindung zwischen Sekundärteil 2, insbesondere Nabe 2.1 und Getriebebaueinheit als Steckverbindung ausgeführt sein, bei welcher Nabe 2.1 und Eingangswelle auf ihren einander zugewandten Flächen jeweils eine Verzahnung aufweisen. Wenigstens ein Teilelement des Sekundärteiles 2, hier ein vorzugsweise scheibenförmiges Element 2.10 ist durch ein größeres Massenträgheitsmoment charakterisiert, so daß das Sekundärteil 2 in seiner Gesamtheit ein größeres Massenträgheitsmoment aufweisen kann als das Primärteil 1. Teile des Sekundärteiles 2 bilden gleichzeitig das Gehäuse 2.11 für die Vorrichtung zur Dämpfung von Schwingungen.

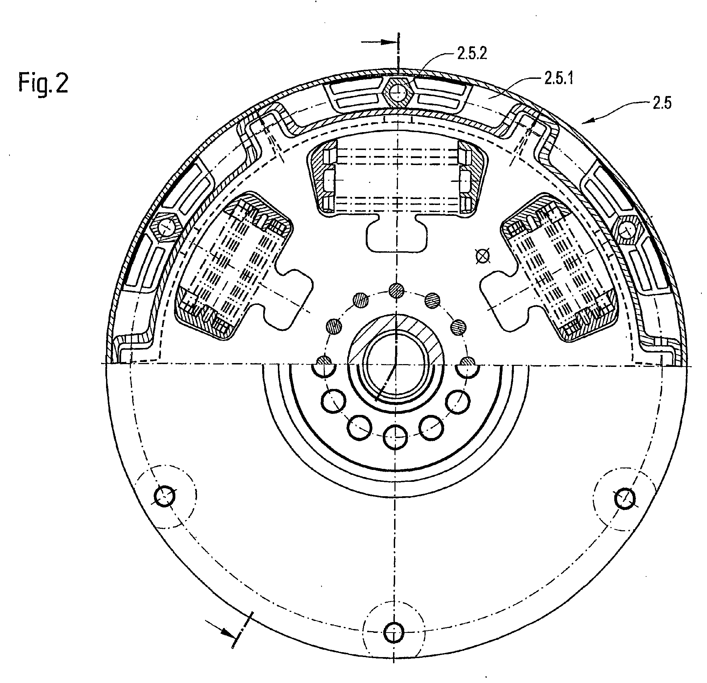

Die Kopplung zwischen Trägerscheibe 2.2 und Primärteil 1.1 erfolgt über eine Feder- und Dämpfunskopplung. Dazu trägt die Trägerscheibe 2.2 eine Mehrzahl von Federmodulen 2.6, die über den Umfang der Trägerscheibe gleichmäßig verteilt sein können. Die beiden genannten Funktionen - Dämpfung und Federkopplung - können von ein und demselben Bauelement, beispielsweise den Federmodulen erfüllt werden. Es ist aber auch eine Funktionstrennung möglich. Bezüglich der Funktionstrennung kann auf das Ausführungsbeispiel gemäß Figur 2 verwiesen werden. Da der gesamte Mechanismus auch mit Dämpfungskopplung und Federkopplung bestens bekannt ist, kann auf die nochmalige Beschreibung im einzelnen hier verzichtet werden.

Die Nabe 2.1 und das scheibenförmige Element 2.10 sind drehfest miteinander verbunden - siehe die Nieten 2.4. Auch ist das Primärteil 1.1 mit der Vebrennungskraftmaschine 3 drehfest gekoppelt.

Das scheibenförmige Element 2.10 ist vorzugsweise Bestandteil des Gehäuses 2.11, welches das Primärteil 1 umschließt. Denkbar ist jedoch auch, dieses als separates Bauteil drehfest mit dem Gehäuse 2.11 zu koppeln.

Des weiteren ist ein scheibenförmiges Element 2.12 vorgesehen, welches der Primärseite d.h. der Antriebsseite zugeordnet ist und mit dieser drehfest verbunden ist und an seinem Außenumfang einen Anlasserkranz 1.1.2 trägt. Dieses Element 2.12 ist hinsichtlich seiner Festigkeit lediglich für diese Funktion dimensioniert.

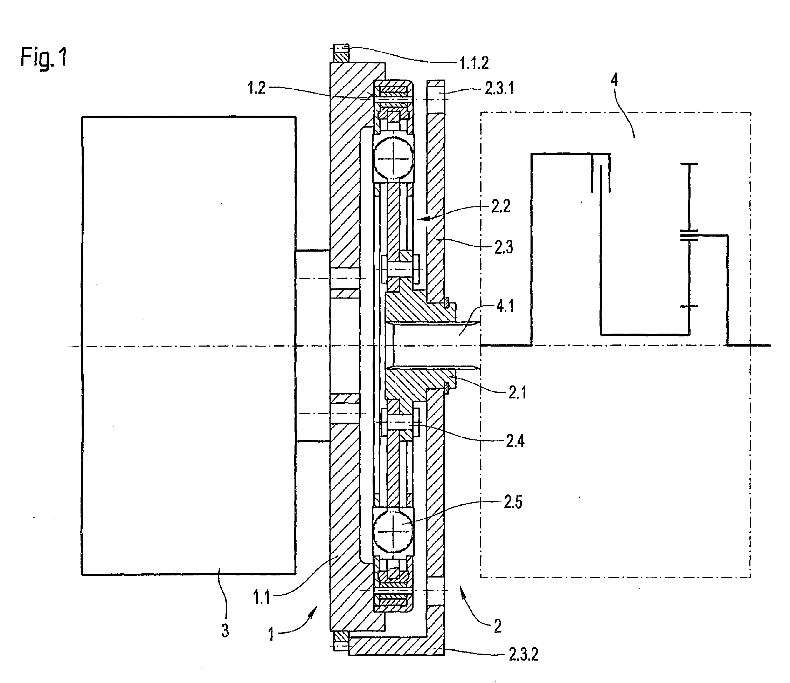

Der in Figur 1 dargestellte Drehschwingungsdämpfer weist einen Primärteil 1 und einen Sekundärteil 2 auf. Der Primärteil 1 besteht aus einem Schwungrad 1.1. Das Sekundärteil 2 umfaßt die folgenden Bauteile: eine Nabe 2.1, eine Trägerscheibe 2 sowie ein Schwungrad 2.3.

Man erkennt ferner einen Motor 3 sowie ein schematisch dargestelltes Getriebe 4.

Der Primärteil 1 ist mit einem Motor 3 drehfest verbunden, beispielsweise durch Anflanschen an der hier nicht gezeigten Motorwelle.

Das Sekundärteil 2 ist mit einer Eingangswelle 4.1 des Getriebes drehfest verbunden. Im vorliegendem Falle handelt es sich um eine Steckverbindung, bei welcher Nabe 2.1 und Eingangswelle 4.1 auf ihren einander zugewandten Flächen jeweils eine Verzahnung aufweisen.

Die Nabe 2.1 und die Trägerscheibe 2.2 sind drehfest miteinander verbunden - siehe die Nieten 2.4. Auch ist das Sekundärrad 2.3 mit der Nabe 2.1 drehfest verbunden, beispielsweise durch eine Schrumpfverbindung.

Die Trägerscheibe 2.2 trägt eine Mehrzahl von Dämpfern 2.5, die über den Umfang der Trägerscheibe gleichmäßig verteilt sein können. Siehe auch Figur 2.

Primärrad 1.1 trägt an seinem Außenumfang einen Anlasserkranz 1.1.2. Primärrad 1 weist ferner in seinem Umfangsbereich eine Aussparung 1.2 auf, die zur Aufnahme des Umfangsbereiches der Dämpfungsträgerscheibe 2 dient. Primärrad 1.1 und Trägerscheibe 2.2 sind in diesem Bereich miteinander verschraubt. Um die Schrauben befestigen zu können, ist Sekundärrad 2.3 in seinem Umfangsbereich mit Aussparungen 2.3.1 versehen, durch die ein Schraubendreher hindurchgeführt werden kann.

Am Außenumfang von Sekundärrad 2.3 kann ein Bund 2.3.2 vorgesehen sein, der wenigstens die Trägerscheibe 2.2 übergreift, gegebenenfalls auch wenigstens einen Teil des Primärrades 1.1. Der Bund trägt durch seine Anordnung im Umfangsbereich zur Steigerung des Massenträgheitsmomentes der Schwungmasse 2 bei, was erwünscht ist.

Stattdessen oder zusätzlich hierzu könnte auch Primärrad 1.1 einen entsprechenden Bund aufweisen, der sich in axialer Richtung noch weiter über die Trägerscheibe 2.2 hinwegerstreckt, als dies im dargestellten Ausführungsbeispiel der Fall ist.

Wie erwähnt, sind Primärteil 1 und Sekundärteil 2 relativ zueinander verdrehbar, und zwar um einen kleinen Winkel, der beispielsweise 5 oder 10 Grad, aber auch größer sein kann. Dabei erfolgt die Auslenkung entgegen einer Kraft, die die Federeinrichtung (beziehungsweise eine Mehrzahl von Federeinrichtungen) aufbringen. Außerdem ist eine Dämpfungskopplung vorgesehen. Siehe beispielsweise DE 83 18 041 oder DE 29 37 237 C2.

Die beiden genannten Funktionen - Dämpfung und Federkopplung - können von ein und demselben Bauelement erfüllt werden. Es ist aber auch eine Funktionstrennung möglich. Die Funktionstrennung ist in einem Ausführungsbeispiel gemäß Figur 2 veranschaulicht. Man erkennt hierbei eine Anzahl von Dämpfermodulen 2.5. Diese umfassen jeweils eine Kammer 2.5.1, in der sich ein Dämpfungsfluid befindet, beispielsweise ein Fett. Jede Kammer weist einen hier nicht dargestellten Auslaß auf. Ein Nocken 2.5.2 ist relativ zur Kammer 2.5.1 beweglich. Eine solche Bewegung findet dann statt, wenn die beiden Schwungmassen relativ zueinander verdreht werden. Bei dieser Bewegung schiebt der Nocken 2.5.2 das in der Kammer 2.5.1 befindliche Dämpfungsfluid durch einen hier nicht dargestellten engen Spalt aus der Kammer aus. Dies bedeutet, daß die Relativverdrehung zwischen den beiden Schwungmassen nur entgegen einer Kraft ablaufen kann.

Man erkennt ferner eine Mehrzahl von Federmodulen 2.6. Dabei handelt es sich um Schraubenfedern, die ebenfalls gleichmäßig über den Umfang der Trägerscheibe angeordnet sind.

Da der gesamte Mechanismus auch mit Dämpfungskopplung und Federkopplung bestens bekannt ist, kann auf die Beschreibung im einzelnen hier verzichtet werden.

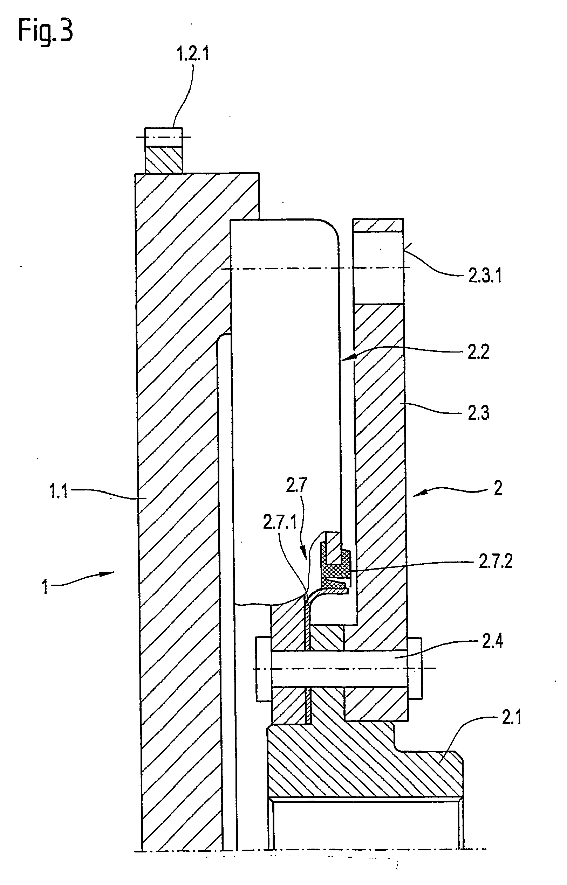

Die in Figur 3 dargestellte Ausführungsform eines Drehschwingungsdämpfers unterscheidet sich nicht wesentlich von der in Figur 1 dargestellten. Hierbei ist wiederum eine Trägerscheibe 2.2 räumlich zwischen einem Primärrad 1.1 eines Primärteils 1 und einer Isolatorscheibe 2.3 eines Sekundärteils 2 angeordnet.

Man erkennt eine Dichtungseinrichtung 2.7. Diese umfaßt einen blattförmigen Dichtungsring 2.7.1, der mit einem weiteren Dichtungsring 2.7.2 zusammenarbeitet. Der weitere Dichtungsring weist eine U-förmige Nut sowie eine Dichtungslippe auf. Man beachte das Anliegen der Dichtungslippe an dem radial äußeren, umgebogenen Ende des blattförmigen Dichtungsringes 2.7.1. Die Dichtungseinrichtung 2.7 dient zum Abdichten der Trägerscheibe 2.2 gegen Austritt von Dämpfungsfluid.

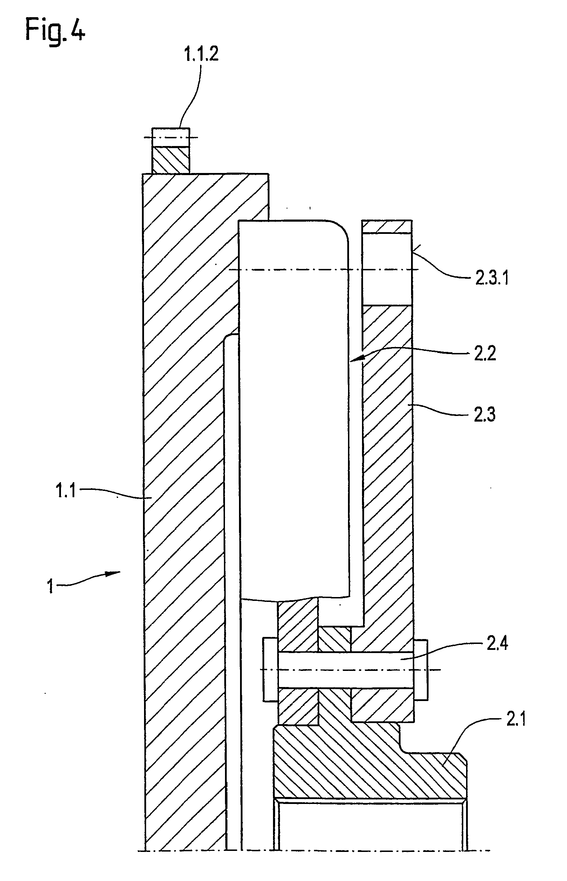

Figur 4 zeigt einen Drehschwingungsdämpfer ähnlich jenem gemäß Figur 3. Hierbei fehlt es jedoch an der Dichtungseinrichtung 2.7.

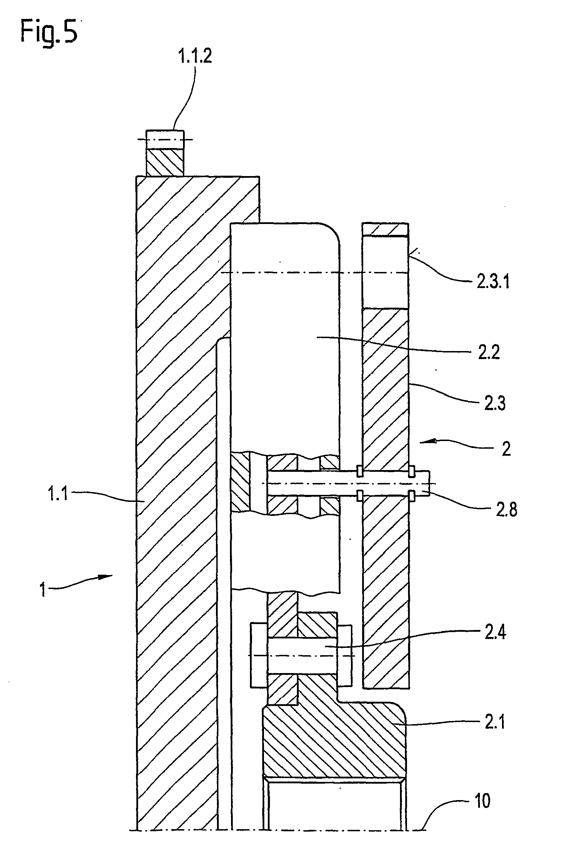

Die in Figur 5 gezeigte vierte Ausführungsform eines Drehschwingungsdämpfers weicht von den ersten drei Ausführungsformen in einem wesentlichen Teil ab. Die Isolatorscheibe 2.3 des Sekundärschwungteiles 2 ist nämlich an die Trägerscheibe 2.2 angeschlossen und von dieser getragen und zwar mittels einer Mehrzahl von Zapfen 2.8. Diese sind um die Drehachse 10 des Drehschwingungsdämpfers gleichmäßig herumgruppiert. Die Zapfen 2.8 sind mit der Trägerscheibe 2.2 sowie mit der Isolatorscheibe 2.3 völlig fest verbunden. Dabei kann die Verbindung zwischen der Trägerscheibe 2.2 und den Zapfen 2.8 eine Steck-Schrumpf-Verbindung sein.

Die Isolatorscheibe 2.3 hat somit mehr den Charakter eines Ringes, als einer Scheibe. Wie man sieht, findet keine Berührung zwischen dem Außenumfang von Nabe 2.1 und dem Innenumfang der Isolatorscheibe 2.3 statt. Die Innenkante der Isolatorscheibe 2.3 könnte noch viel größer bemessen sein, als hier dargestellt. Sie könnte beispielsweise radial außerhalb der Nieten 2.4 liegen. Damit ließe sich beispielsweise eine Schraubverbindung zwischen der Nabe 2.1 und der Trägerscheibe 2.2 leicht herstellen, ohne Beeinträchtigung durch die Isolatorscheibe 2.3.

Im Extremfalle könnte die Isolatorscheibe aus einem Ring bestehen, der einen großen Innendurchmesser aufweist, und der radial weit außen liegt und eine große Masse aufweist. Auch die Befestigung durch die Zapfen 2.8 oder durch ähnliche Elemente an der Trägerscheibe 2.2 müßte demgemäß radial entsprechend weit außen liegen.

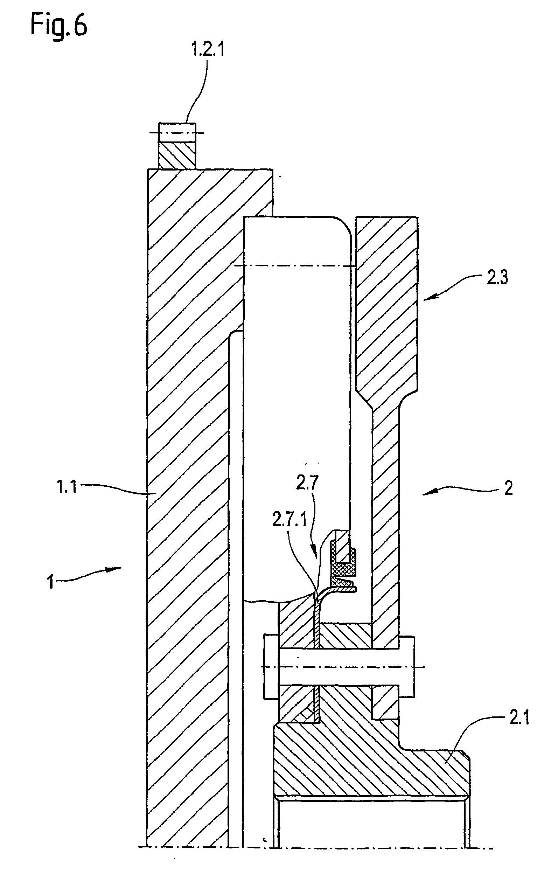

Bei der Ausführungsform der Figur 6 weist die Isolatorscheibe 2.3 einen radial inneren Teil geringer Wandstärke und einen radial äußeren Teil großer Wandstärke auf. Der Grund hierfür ist, daß das Massenträgheitsmoment eines rotationsbewegten Massenteilchens mit zunehmendem radialem Abstand von der Drehachse der Rötationsbewegung ansteigt.

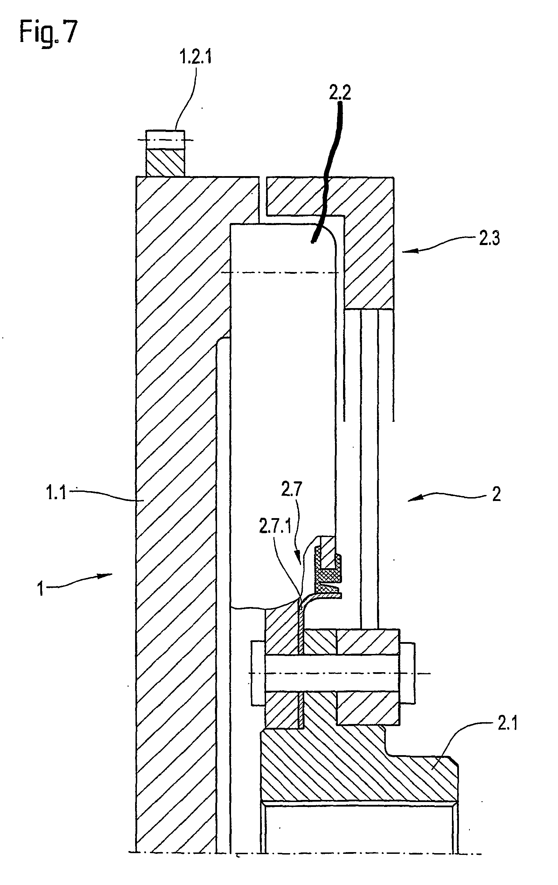

Bei der Ausführungsform gemäß Figur 7 ist die Isolatorscheibe 2.3 als Speichenrad ausgebildet. Dabei liegt die Hauptmasse im radial äußeren Bereich und ist hierbei L-förmig abgekröpft, so daß sie die Trägerscheibe 2.2 außen übergreift, um somit die Ausnutzung des Bauraumes zu optimieren. Die Speichen können relativ dünn bemessen sein und brauchen nur eine geringe Masse zu haben.

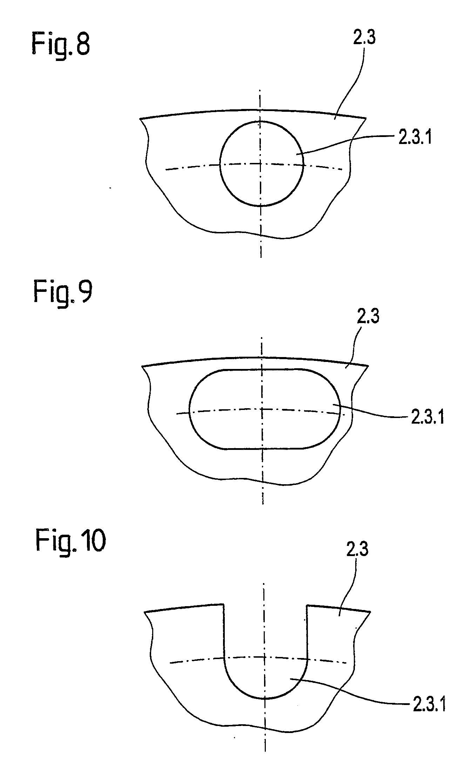

Die Figuren 8 bis 10 zeigen jeweils ein Bruchstück einer Isolatorscheibe 2.3, ausgebrochen aus dessen Umfangsbereich, mit unterschiedlich gestalteten Aussparungen. Figur 8 weist eine kreisrunde Aussparung auf, Figur 9 eine Aussparung in Form eines Langloches und Figur 10 eine randoffene Aussparung.

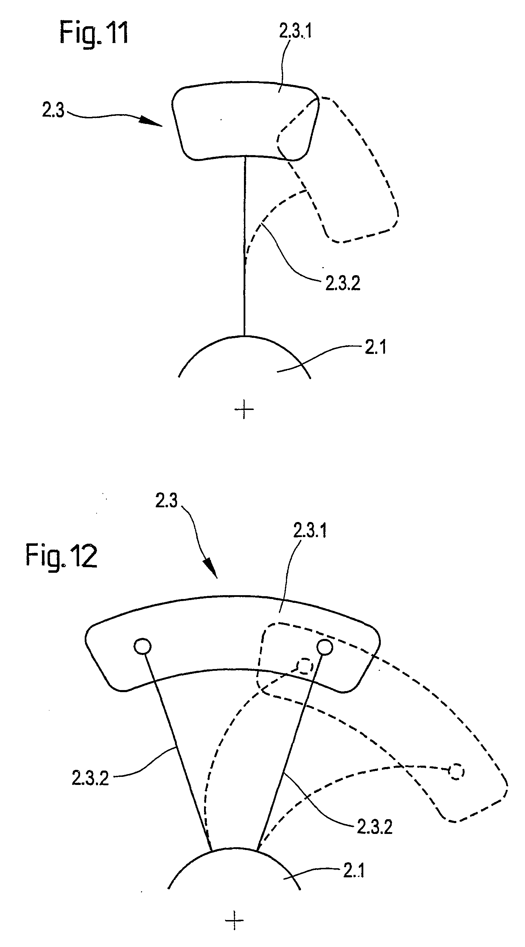

Die in Figur 11 dargestellte Ausführungsform zeigt eine ganz besondere Gestaltung der Isolatorscheibe 2.3 anhand eines Ausschnittes aus dieser in stark schematisierter Darstellung. Sie ist in erster Linie aus einem stark massebehafteten Ring gebildet, der seinerseits aus Ringsegmenten, hier stellvertretend nur das Ringsegment 2.3.1 zusammengesetzt ist. Jedes Ringsegment ist über eine Blattfeder 2.3.2 an die Nabe 2.1 angeschlossen.

Statt einer einzigen Blattfeder pro Ringsegment kann das einzelne Ringsegment 2.3.1 auch mittels zweier oder mehrerer Blattfedern 2.3.2 an die Nabe 2.1 angeschlossen sein, wie in Figur 12 dargestellt. Wesentlich ist bei allen Ausführungsformen, auch den nachstehenden, daß die Trägerscheibe vorwiegend oder allein die Funktion des Tragens von Dämpfer und Federeinrichtung sowie die Funktion des Übertragens von Drehmoment erfüllt. Die Funktion des Massenträgheitsmomentes hingegen wird von der Isolatorscheibe übernommen.

Die Trägerscheibe wird im allgemeinen Bestandteil des Sekundärteiles sein. Sie kann jedoch auch Bestandteil des Primärteiles sein.

## Patentansprüche

1. Vorrichtung zum Dämpfen und Isolieren von Schwingungen zum Einbauen in einen Antriebsstrang zwischen einem Motor (3) und einem Getriebe (4);
1.1 mit einem Primärteil (1) und einem eine Nabe zum Anschlußelement aufweisendes Sekundärteil (2), die eine gemeinsame Drehachse aufweisen;
1.2 zwischen Primärteil (1) und Sekundärteil (2) sind ein hydraulischer Dämpfer (2.5) und eine Federeinrichtung (2.6) geschaltet;
1.3 der hydraulische Dämpfer (2.5) läßt ein begrenztes relatives Verdrehen von Primärteil (1) und Sekundärteil (2) zu;
1.4 die Federeinrichtung (2.6) wirkt einer relativen Verdrehung entgegen;
1.5 es ist eine Trägerscheibe (2.2) zum Tragen des hydraulischen Dämpfers sowie der Federeinrichtung (2.6) vorgesehen; **gekennzeichnet durch** die folgenden Merkmale :
1.6 die Bauteile zwischen Primärteil (1) und Sekundärteil (2) sind frei von Wälzlagern und frei von Gleitlagern.
1.7 es ist eine massebehaftete Isolatorscheibe (2.3) vorgesehen, die axial neben der Trägerscheibe (2.2) angeordnet ist;
1.8 die Isolatorscheibe (2.3) umfaßt in ihrem Umfangsbereich einen massebehafteten Ring;
1.9 der Ring ist segmentiert;
1.10 die Segmente (2.3.1) sind von Blattfedern (2.3.2) oder von Stabfedern getragen, die mit ihren radial inneren Enden an der Nabe (2.1) angreifen;
1.11 die Blattfedern (2.3.2) oder die Stabfedern sind im Ruhezustand gekrümmt und bei Betrieb der Vorrichtung gestreckt, so daß sich die Segmente (2.3.1) bei Betrieb auf einem größeren Radius als im Ruhezustand befinden.

2. Vorrichtung nach Anspruch 1, **dadurch gekennzeichnet, daß** die Isolatorscheibe (2.3) ein größeres Massenträgheitsmoment hat, als die Trägerscheibe (2.2) bezogen auf die Drehachse.

3. Vorrichtung nach Anspruch 2, **dadurch gekennzeichnet, daß** die Isolatorscheibe (2.3) ein vielfaches Massenträgheitsmomentes der Trägerscheibe (2.2) aufweist.

4. Vorrichtung nach einem der Ansprüche 1 bis 3, **dadurch gekennzeichnet, daß** die Trägerscheibe (2.2) bei Minimierung ihrer Masse derart dimensioniert ist, daß sie allein die Anforderung bezüglich der Festigkeit sowie bezüglich des Tragens des hydraulischen Dämpfers (2.5) und der Federeinrichtung (2.6) erfüllt.

5. Vorrichtung nach einem der Ansprüche 1 bis 4, **dadurch gekennzeichnet, daß** die Isolatorscheibe (2.3) in ihrem Umfangsbereich eine höhere Massenkonzentration als in ihrem Zentralbereich aufweist.

6. Vorrichtung nach einem der Ansprüche 1 bis 5, **dadurch gekennzeichnet, daß** die lsolatorscheibe (2.3) von einer Nabe (2.1) getragen ist.

7. Vorrichtung nach Anspruch 1, **dadurch gekennzeichnet, daß** auch die Trägerscheibe (2.2) von der Nabe (2.1) getragen ist.

8. Vorrichtung nach einem der Ansprüche 1 bis 6, **dadurch gekennzeichnet, daß** die Isolatorscheibe (2.3) Aussparungen zum Hindurchführen von Werkzeugen aufweist.

9. Vorrichtung nach einem der Ansprüche 1 bis 7, **dadurch gekennzeichnet, daß** die Isolatorscheibe (2.3) in ihrem Umfangsbereich einen Bund aufweist.

10. Vorrichtung nach einem der Ansprüche 1 bis 8, **dadurch gekennzeichnet, daß** der Bund die Trägerscheibe (2.2) oder den Primärteil (1) oder diese beiden umfaßt.

11. Vorrichtung nach einem der Ansprüche 1 bis 9, **dadurch gekennzeichnet, daß** die Trägerscheibe (2.2) zwischen Primärteil (1) und Isolatorscheibe (2.3) angeordnet ist.

12. Vorrichtung nach einem der Ansprüche 1 bis 10, **gekennzeichnet durch** die folgenden Merkmale:
12.1 die Trägerscheibe (2.2) ist von einem Gehäuse umschlossen;
12.2 das Gehäuse umfaßt zwei zur Drehachse senkrechte Wände, ferner
12.3 eine diese beiden miteinander verbindende Umfangswand; die Isolatorscheibe (2.3) ist aus einer dieser Wände oder aus beiden Wänden gebildet.

## Claims

1. An apparatus for damping and isolating oscillations for installation in a drive train between an engine (3) and a transmission (4);
1.1 with a primary part (1) and a secondary part (2) having a common rotational axis, which secondary part comprises a hub to the connection element;
1.2 a hydraulic damper (2.5) and a spring device (2.6) are switched between the primary part (1) and the secondary part (2);
1.3 the hydraulic damper (2.5) allows a limited relative twisting of primary part (1) and secondary part (2);
1.4 the spring device (2.6) acts against a relative twisting;
1.5 a carrier disk (2.2) for carrying the hydraulic damper and the spring device (2.6) is provided;
1.6 the components between primary part (1) and secondary part (2) are free from roller bearings and free from plain bearings;
**characterized by** the following features:
1.7 an isolator disk (2.3) with mass is provided which is arranged axially next to the carrier disk (2.2);
1.8 the isolator disk comprises in its circumferential region a ring with mass;
1.9 the ring is segmented;
1.10 the segments (2.3.1) are carried by leaf springs (2.3.2) or torsion rod springs which act with their radial inner ends on the hub (2.1);
1.11 the leaf springs (2.3.2) or the torsion rod springs are bent in the idle state and stretched during operation of the apparatus, so that the segments (2.3.1) are located on a larger radius than in the idle state.

2. An apparatus according to claim 1, **characterized in that** isolator disk (2.3) has a higher mass moment of inertia than the carrier disk (2.2), relating to the rotational axis.

3. An apparatus according to claim 2, **characterized in that** the isolator disk (2.3) has a multiple mass moment of inertia of the carrier disk (2.2).

4. An apparatus according to one of the claims 1 to 3, **characterized in that** the carrier disk (2.2) is dimensioned in such a way in the case of minimizing its mass that it fulfils alone the requirements concerning the strength and the carrying of the hydraulic damper (2.5) and the spring device (2.6).

5. An apparatus according to one of the claims 1 to 4, **characterized in that** the isolator disk (2.3) has a higher concentration of mass in its circumferential region than in its central region.

6. An apparatus according to one of the claims 1 to 5, **characterized in that** the isolator disk (2.3) is carried by a hub (2.1).

7. An apparatus according to claim 1, **characterized in that** the carrier disk (2.2) is also carried by the hub (2.1).

8. An apparatus according to one of the claims 1 to 6, **characterized in that** the isolator disk (2.3) comprises cavities for guiding through tools.

9. An apparatus according to one of the claims 1 to 7, **characterized in that** the isolator disk (2.3) comprises a collar in its circumferential area.

10. An apparatus according to one of the claims 1 to 8, **characterized in that** the collar encompasses the carrier disk (2.2) or the primary part (1) or both of them.

11. An apparatus according to one of the claims 1 to 9, **characterized in that** the carrier disk (2.2) is arranged between primary part (1) and isolator disk (2.3).

12. An apparatus according to one of the claims 1 to 10, **characterized by** the following features:
12.1 the carrier disk (2.2) is enclosed by a housing;
12.2 the housing comprises two walls perpendicular to the rotational axis, and further a circumferential wall connecting the two with each other;
12.3 the isolator disk (2.3) is formed by one of these walls or by both of these walls.

## Revendications

1. Dispositif susceptible d'amortir et d'isoler les vibrations et destiné à être monté dans un groupe motopropulseur entre un moteur (3) et une transmission (4) ;
1.1 avec une partie primaire (1) et une partie secondaire (2) comportant un moyeu pour l'élément raccord, ces deux parties comportant un axe de rotation commun ;
1.2 un amortisseur hydraulique (2.5) et un système de ressort (2.6) sont interposés entre la partie primaire (1) et la partie secondaire (2) ;
1.3 l'amortisseur hydraulique (2.5) autorise une rotation relative limitée entre la partie primaire (1) et la partie secondaire (2) ;
1.4 le système de ressort (2.6) s'oppose à une rotation relative ;
1.5 un disque support (2.2) destiné à porter l'amortisseur hydraulique ainsi que le système de ressort (2.6) est prévu ;
1.6 les pièces interposées entre la partie primaire (1) et la partie secondaire (2) sont libres de roulements à rouleaux et de coussinets lisses,
**caractérisé par** les particularités suivantes :
1.7 il est prévu un disque isolant (2.3) ayant une masse qui est disposé à côté du disque support (2.2) suivant la direction axiale ;
1.8 le disque isolant (2.3) comprend sur son pourtour un anneau ayant une masse ;
1.9 l'anneau est segmenté ;
1.10 les segments (2.3.1) sont portés par des ressorts à lames (2.3.2) ou des tiges ressort dont les extrémités radialement internes sont attachées au moyeu (2.1) ;
1.11 les ressorts à lames (2.3.2) ou les tiges ressort sont incurvées au repos et étirées pendant le fonctionnement du dispositif de sorte qu'en fonctionnement les segments (2.3.1) sont situés sur un rayon plus important qu'au repos.

2. Dispositif selon la revendication 1, **caractérisé en ce que** le disque isolant (2.3) a un moment d'inertie de masse supérieur à celui du disque support (2.2), rapporté à l'axe de rotation.

3. Dispositif selon la revendication 2, **caractérisé en ce que** le disque isolant (2.3) a un moment d'inertie de masse multiple de celui du disque support (2.2).

4. Dispositif selon l'une quelconque des revendications 1 à 3, **caractérisé en ce que**, si l'on réduit la masse du disque support (2.2) à un minimum, celui-ci est dimensionné de manière à remplir à lui seul l'exigence en matière de solidité ainsi que de capacité de porter l'amortisseur hydraulique (2.5) et le système de ressort (2.6).

5. Dispositif selon l'une quelconque des revendications 1 à 4, **caractérisé en ce que** le disque isolant (2.3) comporte sur son pourtour une concentration de masse plus importante que dans sa partie centrale.

6. Dispositif selon l'une quelconque des revendications 1 à 5, **caractérisé en ce que** le disque isolant (2.3) est porté par un moyeu (2.1).

7. Dispositif selon la revendication 1, **caractérisé en ce que** le disque support (2.2) est lui aussi porté par le moyeu (2.1).

8. Dispositif selon l'une quelconque des revendications 1 à 6, **caractérisé en ce que** le disque isolant (2.3) comporte des évidements pour le passage d'outils.

9. Dispositif selon l'une quelconque des revendications 1 à 7, **caractérisé en ce que** le disque isolant (2.3) comporte un collet sur son pourtour.

10. Dispositif selon l'une quelconque des revendications 1 à 8, **caractérisé en ce que** le collet entoure le disque porteur (2.2) ou la partie primaire (1) ou les deux.

11. Dispositif selon l'une quelconque des revendications 1 à 9, **caractérisé en ce que** le disque support (2.2) est interposé entre la partie primaire (1) et le disque isolant (2.3).

12. Dispositif selon l'une quelconque des revendications 1 à 10, **caractérisé par** les particularités suivantes :
12.1 le disque support (2.2) est emprisonné dans un boîtier ;
12.2 le boîtier comprend deux parois perpendiculaires à l'axe de rotation ainsi qu'une paroi circonférentielle reliant ces deux parois ;
12.3 le disque isolant (2.3) est formé par une de ces parois ou par les deux.
